# EUROPEAN PATENT APPLICATION

(11) **EP 3 922 484 A1**
(43) Date of publication of application: **15.12.2021**
(21) Application number: 21179021.7
(22) Date of filing: 11.06.2021
(51) Int. Cl.: B60C 1/00, C08L 9/06

(54) **PNEUMATIC TIRE AND RUBBER COMPOSITION INCLUDING SURFACE-FUNCTIONALIZED CARBON BLACK AND TETRAZINE MODIFIED ELASTOMER**

(30) Priority: 11.06.2020 US 202063037642 P; 03.03.2021 US 202117190457
(71) Applicant: The Goodyear Tire & Rubber Company, Akron, OH 44316 (US)
(72) Inventor: HAYAT, Jeffery Hakim, Uniontown, 44685 (US); DENNIS-PELCHER, Robert Vincent, Uniontown, 44685 (US); MAZUMDAR, Arindam, Stow, 44224 (US)
(74) Representative: Goodyear IP Law

(57) **Abstract**

A vulcanizable or vulcanized rubber composition and a pneumatic tire comprising such a rubber composition is disclosed. The rubber composition comprises, based on parts by weight per 100 parts by weight elastomer (phr):
100 phr of at least one diene-based elastomer;
from 1 to 80 phr of carbon black;
from 0 to 100 phr of silica;
from 1 to 10 phr of a surface-functionalized carbon allotrope;
from 1 to 20 parts by weight of a sulfur-containing organosilane per 100 parts by weight of the silica;
from 0.1 to 10 phr of a tetrazine compound of formula 1 or a salt thereof 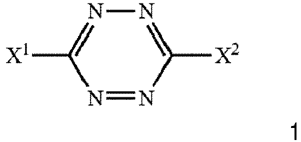 where X¹ and X² each represent a heterocyclic group.

## Description

### Background of the Invention

Rubber compositions containing diene-based elastomers often contain reinforcing fillers such as for example rubber reinforcing carbon black and precipitated silica together with a coupling agent for the precipitated silica. Rubber tires may contain at least one component comprised of such rubber composition.

Sometimes it may be desirable to provide a rubber composition containing an alternative reinforcing filler.

For example, such additional, or alternative, reinforcing filler may be in a form of graphene, carbon nanotubes or fullerenes.

Graphene, carbon nanotubes and fullerenes may exhibit exceptional mechanical and electrical properties that make them very interesting for the use in rubber compositions including for tire components. However, in order to benefit from the advantages of graphene or carbon nanotubes, it is important for a high level of their dispersion in their associated rubber be promoted. Such dispersion is generally a challenge because graphene sheets tend to stack together, exfoliated graphene platelets tend to agglomerate and carbon nanotubes tend to from entangled aggregates to thereby form restricted dispersions in the rubber composition and thereby weak interfacial interactions with diene-based elastomers in the rubber composition.

Therefore, it is recognized that more effective dispersions of graphene, carbon nanotubes and fullerenes in rubber compositions containing diene-based elastomer is desired.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated.

### Summary of the Invention

The invention relates to a rubber composition in accordance with claim 1, and to a pneumatic tire in accordance with claim 14.

Dependent claims refer to preferred embodiments of the invention.

Hence, the invention discloses a vulcanizable or vulcanized rubber composition comprising, based on parts by weight per 100 parts by weight elastomer (phr):
100 phr of at least one diene-based elastomer;
from 1 to 80 phr of carbon black;
from 0 to 100 phr of silica;
from 1 to 10 phr of a surface-functionalized carbon allotrope;
from 1 to 20 parts by weight of a sulfur-containing organosilane per 100 parts by weight of the silica;
from 0.1 to 10 phr of a tetrazine compound of formula 1 or a salt thereof 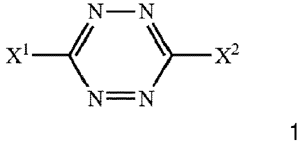
where X¹ and X² each represent a heterocyclic group.

### Description of Preferred Embodiments of the Invention

Previously, when using carbon nanotubes or graphene in compounds it was clear that the polymer-filler interaction was poor leading to sub-par performance properties. In order to improve the interaction in the present approach, tetrazine was pre-reacted with the polymer in-situ to form a functionalized polymer where X¹ and X² pendant groups could interact with the carbon nanotubes to improve dispersion. In conjunction silane was added to disperse and couple the silica to the polymer. The included data shows clearly that with the combination of the tetrazine and the surface functionalized carbon nanotubes, the stiffness of the compound is increased while reducing hysteresis. In the end this technology allows for breaking the usual wear-stiffness-hysteresis-tear-wet tradeoffs.

Many carbon-based nanomaterials such as graphene, carbon nanotubes, unique carbon allotropes, fullerenes, or any combination thereof are prepared/synthesized or post treated with hydroxyl and carboxylic acid functionality, just to name a few groups as examples. The polar functionality makes it difficult to disperse and "wet" the filler material with the polymer, along the same lines as uncoupled silica. By utilizing tetrazine that functionalizes the polymer and interacts with the surface modified carbon allotrope the filler-polymer interaction can be dramatically improved. The improved interaction of the filler with the rubber improves dispersion, decreases filler-filler networking, increases polymer-filler networking, reduces hysteresis, improves abrasion resistance and tear properties for the compound thereby breaking traditional tire tradeoffs such as rolling resistance/tread wear, etc. and improving tire reinforcement.

This invention is unique due to the combination of carbon allotrope, in particular in the form of carbon nanofillers, with tetrazine functionalized polymer with affinity groups for the carbon allotrope. This combination in the compound formulation, even without silica, may impart significantly improved interaction between the functionalized carbon filler and the polymer.

There is disclosed then a vulcanizable or vulcanized rubber composition comprising, based on parts by weight per 100 parts by weight elastomer (phr):
100 phr of at least one diene-based elastomer;
from 1 to 80 phr of carbon black;
from 0 to 100 phr of silica;
from 1 to 10 phr of a surface-functionalized carbon allotrope;
from 1 to 20 parts by weight of a sulfur-containing organosilane per 100 parts by weight of the silica;
from 0.1 to 10 phr of a tetrazine compound of formula 1 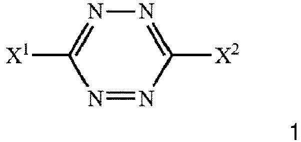
where X¹ and X² each represent a heterocyclic group.

There is further disclosed a pneumatic tire comprising the rubber composition.

The rubber composition includes from 1 to 10 phr, alternatively 2 to 5 phr, of a surface-functionalized carbon allotrope. Suitable carbon allotropes include single-walled carbon nanotubes, multi-walled carbon nanotubes, graphene, fullerenes, and the like. Suitable surface-functionalized carbon nanotubes may be produced, for example, as taught in U.S. Patent Nos. 9,353,240, 9,636,649, and U.S. Patent Publication No. 2019/0161350.

In one embodiment, the carbon allotrope is carbon nanotubes. In one embodiment, the carbon nanotubes comprise a plurality of carbon nanotubes comprising single wall, double wall or multi wall carbon nanotube fibers having an aspect ratio of from 10 to 500, preferably from 60 to 200, and a surface oxidation level of from 1 to 15 weight percent, alternatively 3 weight percent to 15 weight percent, alternatively from 1 to 10 weight percent, alternatively from 5 weight percent to 10 weight percent, alternatively from 1 to 5 weight percent, alternatively from 1 to 3 weight percent.

The oxidation level is defined as the amount by weight of oxygenated species covalently bound to the carbon nanotube, thus in this embodiment the oxygenated species represent the surface functionalization. The thermogravimetric method for the determination of the percent weight of oxygenated species on the carbon nanotube involves taking 5 mg of the dried oxidized carbon nanotube and heating at 5°C/minute from room temperature to 1000 degrees centigrade in a dry nitrogen atmosphere. The percentage weight loss from 200 to 600 degrees centigrade is taken as the percent weight loss of oxygenated species.

The oxygenated species could also be quantified using Fourier transform infrared spectroscopy, FTIR, particularly in the wavelength range 1730-1680 cm⁻¹.

The carbon nanotube fibers can have oxidation species comprising of carboxylic acid or derivative carbonyl containing species and are essentially discrete individual fibers, not entangled as a mass. The derivative carbonyl species can include phenols, ketones, quaternary amines, amides, esters, acyl halogens, monovalent metal salts and the like. Alternatively, or in addition, the carbon nanotubes may comprise an oxidation species selected from hydroxyl or derived from hydroxyl containing species.

Suitable surface-functionalized multiwall carbon nanotubes are available commercially as MR 1420X DLC from Molecular Rebar Design LLC (see e.g. Peddini et al., RubberWorld.com, February 2019, p 34-39.)

The rubber composition further includes from 0.1 to 10 phr of a tetrazine compound of formula 1.

The rubber composition of the present invention comprises a compound represented by formula 1 or a salt thereof.

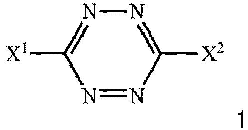

In the formula 1, X1 and X2 each represent a heterocyclic group. Suitable tetrazine compounds include those disclosed in US-A-2018/0273723; US-A-2020/0040167; and Kojima et al, paper A13 presented at the 196th Technical Meeting of the ACS Rubber Division, Cleveland, Ohio, October 9, 2019.

The "heterocyclic group" as used herein is not particularly limited. Examples include 2-pyridyl, 3-pyridyl, 4-pyridyl, 2-pyrazinyl, 2-pyrimidyl, 4-pyrimidyl, 5-pyrimidyl, 3-pyridazyl, 4-pyridazyl, 4-(1,2,3-triazyl), 5-(1,2,3-triazyl), 2-(1,3,5-triazyl), 3-(1,2,4-triazyl), 5-(1,2,4-triazyl), 6-(1,2,4-triazyl), 2-quinolyl, 3-quinolyl, 4-quinolyl, 5-quinolyl, 6-quinolyl, 7-quinolyl, 8-quinolyl, 1-isoquinolyl, 3-isoquinolyl, 4-isoquinolyl, 5-isoquinolyl, 6-isoquinolyl, 7-isoquinolyl, 8-isoquinolyl, 2-quinoxalyl, 3-quinoxalyl, 5-quinoxalyl, 6-quinoxalyl, 7-quinoxalyl, 8-quinoxalyl, 3-cinnolyl, 4-cinnolyl, 5-cinnolyl, 6-cinnolyl, 7-cinnolyl, 8-cinnolyl, 2-quinazolyl, 4-quinazolyl, 5-quinazolyl, 6-quinazolyl, 7-quinazolyl, 8-quinazolyl, 1-phthalazyl, 4-phthalazyl, 5-phthalazyl, 6-phthalazyl, 7-phthalazyl, 8-phthalazyl, 1-tetrahydroquinolyl, 2-tetrahydroquinolyl, 3-tetrahydroquinolyl, 4-tetrahydroquinolyl, 5-tetrahydroquinolyl, 6-tetrahydroquinolyl, 7-tetrahydroquinolyl, 8-tetrahydroquinolyl, 1-pyrrolyl, 2-pyrrolyl, 3-pyrrolyl, 2-furyl, 3-furyl, 2-thienyl, 3-thienyl, 1-imidazolyl, 2-imidazolyl, 4-imidazolyl, 5-imidazolyl, 1-pyrazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 4-(1,2,3-thiadiazolyl), 5-(1,2,3-thiadiazolyl), 3-(1,2,5-thiadiazolyl), 2-(1,3,4-thiadiazolyl), 4-(1,2,3-oxadiazolyl), 5-(1,2,3-oxadiazolyl), 3-(1,2,4-oxadiazolyl), 5-(1,2,4-oxadiazolyl), 3-(1,2,5-oxadiazolyl), 2-(1,3,4-oxadiazolyl), 1-(1,2,3-triazolyl), 4-(1,2,3-triazolyl), 5-(1,2,3-triazolyl), 1-(1,2,4-triazolyl), 3-(1,2,4-triazolyl), 5-(1,2,4-triazolyl), 1-tetrazolyl, 5-tetrazolyl, 1-indolyl, 2-indolyl, 3-indolyl, 4-indolyl, 5-indolyl, 6-indolyl, 7-indolyl, 1-isoindolyl, 2-isoindolyl, 3-isoindolyl, 4-isoindolyl, 5-isoindolyl, 6-isoindolyl, 7-isoindolyl, 1-benzimidazolyl, 2-benzimidazolyl, 4-benzimidazolyl, 5-benzimidazolyl, 6-benzimidazolyl, 7-benzimidazolyl, 2-benzofuranyl, 3-benzofuranyl, 4-benzofuranyl, 5-benzofuranyl, 6-benzofuranyl, 7-benzofuranyl, 1-isobenzofuranyl, 3-isobenzofuranyl, 4-isobenzofuranyl, 5-isobenzofuranyl, 6-isobenzofuranyl, 7-isobenzofuranyl, 2-benzothienyl, 3-benzothienyl, 4-benzothienyl, 5-benzothienyl, 6-benzothienyl, 7-benzothienyl, 2-benzoxazolyl, 4-benzoxazolyl, 5-benzoxazolyl, 6-benzoxazolyl, 7-benzoxazolyl, 2-benzothiazolyl, 4-benzothiazolyl, 5-benzothiazolyl, 6-benzothiazolyl, 7-benzothiazolyl, 1-indazolyl, 3-indazolyl, 4-indazolyl, 5-indazolyl, 6-indazolyl, 7-indazolyl, 2-morpholyl, 3-morpholyl, 4-morpholyl, 1-piperazyl, 2-piperazyl, 1-piperidyl, 2-piperidyl, 3-piperidyl, 4-piperidyl, 2-tetrahydropyranyl, 3-tetrahydropyranyl, 4-tetrahydropyranyl, 2-tetrahydrothiopyranyl, 3-tetrahydrothiopyranyl, 4-tetrahydrothiopyranyl, 1-pyrrolidyl, 2-pyrrolidyl, 3-pyrrolidyl, 2-tetrahydrofuranyl, 3-tetrahydrofuranyl, 2-tetrahydrothienyl, 3-tetrahydrothienyl, and the like. Among these groups, the heterocyclic group is preferably a pyridyl, furanyl, thienyl, pyrimidyl, or pyrazyl group, and is more preferably a pyridyl group.

The heterocyclic group optionally has one or more substituents at any replaceable position. Examples of the substituents include, but are not particularly limited to, halogen atoms and amino, aminoalkyl, alkoxycarbonyl, acyl, acyloxy, amide, carboxyl, carboxyalkyl, formyl, nitrile, nitro, alkyl, hydroxyalkyl, hydroxy, alkoxy, aryl, aryloxy, heterocyclic, thiol, alkylthio, arylthio, and like groups. The number of substituents is preferably 1 to 5, and more preferably 1 to 3.

The "halogen atom" as used herein includes fluorine, chlorine, bromine, and iodine atoms. Preferable halogen atoms are chlorine, bromine, and iodine atoms.

The "amino" as used herein includes an amino group represented by -NH₂ and substituted amino groups. Examples of substituted amino groups include C1-6 (particularly C1-4) linear or branched monoalkylamino groups, such as methylamino, ethylamino, n-propylamino, isopropylamino, n-butylamino, isobutylamino, s-butylamino, t-butylamino, I-ethylpropylamino, n-pentylamino, neopentylamino, n-hexylamino, isohexylamino, and 3-methylpentylamino; and dialkylamino groups having two C1-6 (particularly C1-4) linear or branched alkyl groups, such as dimethylamino, ethlmethylamino, and diethylamino.

The "aminoalkyl" as used herein is not particularly limited. Examples include aminoalkyl groups (preferably amino-containing linear or branched alkyl groups having 1 to 6 carbon atoms), such as aminomethyl, 2-aminoethyl, and 3-aminopropyl.

The "alkoxycarbonyl" as used herein is not particularly limited. Examples include methoxycarbonyl and ethoxycarbonyl.

The "acyl" as used herein is not particularly limited. Examples include C1-4 linear or branched alkylcarbonyl groups, such as acetyl, propionyl, and pivaloyl.

The "acyloxy" as used herein is not particularly limited. Examples include acetyloxy, propionyloxy and n-butyryloxy.

The "amide" as used herein is not particularly limited. Examples include carboxylic acid amide groups, such as acetamide and benzamide; thioamide groups such as thioacetamide and thiobenzamide; N-substituted amide groups such as N-methylacetamide and N-benzylacetamide.

The "carboxyalkyl" as used herein is not particularly limited. Examples include carboxy-alkyl groups (preferably carboxy-containing alkyl groups having 1 to 6 carbon atoms), such as carboxymethyl, carboxyethyl, carboxy-n-propyl, carboxy-n-butyl, carboxy-n-pentyl, and carboxy-n-hexyl.

The "hydroxyalkyl" as used herein is not particularly limited. Examples include hydroxyalkyl groups (preferably hydroxy-containing alkyl groups having 1 to 6 carbon atoms), such as hydroxymethyl, hydroxyethyl, hydroxy-n-propyl, and hydroxy-n-butyl.

The "alkyl" as used herein is not particularly limited. Examples include linear, branched, or cyclic alkyl groups. Specific examples include C1-6 (particularly C1-4) linear or branched alkyl groups, such as methyl, ethyl, n-propyl, isopropyl, n-butyl, isobutyl, s-butyl, t-butyl, 1-ethylpropyl, n-pentyl, neopentyl, n-hexyl, isohexyl, and 3-methylpentyl; C3-8 (particularly C3-6) cyclic alkyl groups, such as cyclopropyl, cyclobutyl, cyclopentyl, cyclohexyl, cycloheptyl, and cyclooctyl.

The "hydroxyalkyl" as used herein is not particularly limited. Examples include hydroxyalkyl groups (preferably hydroxy-containing alkyl groups having 1 to 6 carbon atoms), such as hydroxymethyl, hydroxyethyl, hydroxy-n-propyl, and hydroxy-n-butyl.

The "alkoxy" as used herein is not particularly limited. Examples include linear, branched, or cyclic alkoxy groups. Specific examples include C1-6 (particularly C1-4) linear or branched alkoxy groups, such as methoxy, ethoxy, n-propoxy, isopropoxy, n-butoxy, t-butoxy, n-pentyloxy, neopentyloxy, and n-hexyloxy; C3-8 (particularly C3-6) cyclic alkoxy groups, such as cyclopropyloxy, cyclobutyloxy, cyclopenthyloxy, cyclohexyloxy, cycloheptyloxy, and cyclooctyloxy; and the like.

The "aryl" as used herein is not particularly limited. Examples include phenyl, biphenyl, naphthyl, dihydroindenyl, 9H-fluorenyl, and the like.

The "aryloxy" as used herein is not particularly limited. Examples include phenoxy, biphenyloxy, naphthoxy, and the like.

The "alkylthio" as used herein is not particularly limited. Examples include linear, branched, or cyclic alkylthio groups. Specific examples include C1-6 (particularly C1-4) linear or branched alkylthio groups, such as methylthio, ethylthio, n-propylthio, isopropylthio, n-butylthio, isobutylthio, s-butylthio, t-butylthio, I-ethylpropylthio, n-pentylthio, neopentylthio, n-hexylthio, isohexylthio, and 3-methylpentylthio; C3-8 (particularly C3-6) cyclic alkylthio groups, such as cyclopropylthio, cyclobutylthio, cyclopentylthio, cyclohexylthio, cycloheptylthio, and cyclooctylthio.

The "arylthio" as used herein is not particularly limited. Examples include phenylthio, biphenylthio and naphthylthio-.

The "salt" of the tetrazine compound represented by Formula 1 is not particularly limited and includes all types of salts. Examples of such salts include inorganic acid salts such as hydrochloride, sulfate, and nitrate; organic acid salts such as acetate and methanesulfonate; alkali metal salts such as sodium salt and potassium salt; alkaline earth metal salts such as magnesium salt and calcium salt; ammonium salts such as dimethylarmonium and triethylammonium; and the like.

The tetrazine compounds are preferably compounds wherein X1 and X2 are the same or different, and each represents an optionally substituted pyridyl group, an optionally substituted furanyl group, an optionally substituted thienyl group, an optionally substituted pyrazolyl group, an optionally substituted pyrimidyl group, or an optionally substituted pyrazyl group.

More preferably, tetrazine compounds are compounds wherein X1 and X2 are the same or different, and each represents an optionally substituted 2-pyridyl group, an optionally substituted 3-pyridyl group, an optionally substituted 4-pyridyl group, an optionally substituted 2-furanyl group, an optionally substituted 2-thienyl group, an optionally substituted 1-pyrazolyl group, an optionally substituted 2-pyrimidyl group, or an optionally substituted 2-pyrazyl group. Specifically, compounds wherein X1 and X2 are the same or different, and each represents an optionally substituted 2-pyridyl group, an optionally substituted 3-pyridyl group, an optionally substituted 4-pyridyl group, or an optionally substituted 2-furanyl group are particularly preferable.

Specific examples of the tetrazine compound include 3,6-bis(2-pyridyl)-1,2,4,5-tetrazine, 3,6-bis(3-pyridyl)-1,2,4,5-tetrazine, 3,6-bis(4-pyridyl)-1,2,4,5-tetrazine, 3,6-bis(2-furanyl)-1,2,4,5-tetrazine, 3,6-bis(3,5-dimethyl-1-pyrazolyl)-1,2,4,5-tetrazine, 3,6-bis(2-thienyl)-1,2,4,5-tetrazine, 3-methyl-6-(2-pyridyl)-1,2,4,5-tetrazine, 3,6-bis(2-pyrimidinyl)-1,2,4,5-tetrazine, and 3,6-bis(2-pyrazyl)-1,2,4,5-tetrazine.

Among these, preferable tetrazine compounds are 3,6-bis(2-pyridyl)-1,2,4,5-tetrazine, 3,6-bis(3-pyridyl)-1,2,4,5-tetrazine, 3,6-bis(2-furanyl)-1,2,4,5-tetrazine, and 3,6-bi(4-pyridyl)-1,2,4,5-tetrazine. More preferably, tetrazine compounds are 3,6-bis(2-pyridyl)-1,2,4,5-tetrazine, 3,6-bis(3-pyridyl)-1,2,4,5-tetrazine, and 3,6-bis(4-pyridyl)-1,2,4,5-tetrazine.

From the viewpoint of imparting rolling resistance to the rubber component, the amount of the tetrazine compound is 0.1 to 10 parts by mass, per 100 parts by mass of the rubber component in the rubber composition. The amount of the tetrazine compound is preferably 0.25 to 7 parts by mass, and more preferably 0.5 to 5 parts by mass, per 100 parts by mass of the rubber component in the rubber composition.

The rubber composition includes one or more rubbers or elastomers containing olefinic unsaturation. The phrases "rubber or elastomer containing olefinic unsaturation" or "diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Further examples of functionalized elastomers may be used, including functionalized version of polybutadiene, polyisoprene and styrene-butadiene rubbers. The preferred rubber or elastomers are polyisoprene (natural or synthetic), polybutadiene and SBR.

In one aspect the use of at least one additional rubber is preferably of at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of about 30 to about 45 percent.

By emulsion polymerization prepared E-SBR, it is meant that styrene and 1,3-butadiene are copolymerized as an aqueous emulsion. Such are well known to those skilled in such art. The bound styrene content can vary, for example, from about 5 to about 50 percent. In one aspect, the E-SBR may also contain acrylonitrile to form a terpolymer rubber, as E-SBAR, in amounts, for example, of about 2 to about 30 weight percent bound acrylonitrile in the terpolymer.

Emulsion polymerization prepared styrene/butadiene/acrylonitrile copolymer rubbers containing about 2 to about 40 weight percent bound acrylonitrile in the copolymer are also contemplated as diene-based rubbers for use in this invention.

The solution polymerization prepared SBR (S-SBR) typically has a bound styrene content in a range of from 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may from 0 to 100 phr of silica; alternatively, from 20 to 100 phr, alternatively, from 50 to 100 phr, from 80 to 100, of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of about 40 to about 600 square meters per gram. In another embodiment, the BET surface area may be in a range of about 80 to about 300 square meters per gram. The BET method of measuring surface area is described in the Journal of the American Chemical Society, Volume 60, Page 304 (1930).

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Evonik with, for example, designations VN2 and VN3.

Commonly employed carbon blacks can be used as a conventional filler in an amount ranging from 1 to 80 phr. In another embodiment, from 1 to 50 phr, 1 to 10 phr of carbon black may be used. Representative examples of such carbon blacks include N110, N120, N121, N134, N191N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 210 g/kg and DBP number ranging from 34 to 150 cm³/100 g.

In one embodiment the rubber composition contains from 1 to 20 parts by weight, alternatively 5 to 15 parts by weight, per 100 parts by weight of silica, of a sulfur containing organosilicon compound. In one embodiment, the sulfur containing organosilicon compounds include bis(trialkoxysilylalkyl) polysulfides. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include mercaptosilanes and blocked mercaptosilanes. In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Evonik.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1 to 5 phr. Typical amounts of tackifier resins, if used, comprise 0.5 to 10 phr, usually 1 to 5 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise about 1 to 5 phr. Typical amounts of fatty acids, if used, which can include stearic acid comprise about 0.5 to about 10 phr. Typical amounts of zinc oxide comprise about 0to about 5 phr. Typical amounts of waxes comprise about 1 to about 5 phr.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4, alternatively about 0.8 to about 3, phr. In another embodiment, combinations of a primary and a secondary accelerator might be used with the secondary accelerator being used in smaller amounts, such as from about 0.05 to about 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from about 100°C to 200°C. In one embodiment, the vulcanization is conducted at temperatures ranging from about 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Examples

A series of rubber compounds were mixed in a multi-step mix procedure following the compositions given in Tables 1 and 2, with all amounts given in phr. Tire performance indices based on several of the physical properties are given in Table 3.

As seen in Table 3, the combination of carbon nanotubes and the tetrazine compound of formula 1 leads to an improved rolling resistance (hysteresis as measured by tan delta at 10% strain, rebound at 23 C and 100C) while maintaining stiffness (G' at 10% strain) as compared with control.

**Table 1**

| | |
|---|---|
| Polybutadiene Rubber ¹ | 40 |
| Styrene-Butadiene Rubber ² | 60 |
| Silica | 90 |
| Carbon Black | 2 |
| Carbon Nanotubes (MWCNT) | variable as per Table 2 |
| Tetrazine compound | variable as per Table 2 |
| Waxes ³ | 1.5 |
| Naphthenic Oil | 37.5 |
| Antidegradants ⁴ | 3.25 |
| Fatty Acids | 5 |
| Zinc Oxide | 1.75 |
| Sulfur | 1.3 |
| Accelerators ⁵ | 4.75 |
| Silane Disulfide⁶ | 9 |

| | |
|---|---|
| ¹ Budene 1207, from The Goodyear Tire & Rubber Company ² SLR 4602, from Trinseo ³ Microcrystalline and paraffinic types ⁴ Paraphenylene diamine and dihydroquinoline types ⁵ Sulfenamide and guanidine types ⁶ bis-triethoxysilylpropyl disulfide | |

**Table 2**

| Sample No. | C1 | E1 | C2 | E2 |
|---|---|---|---|---|
| MWCNT ⁷ | 0 | 2 | 0 | 2 |
| Tetrazine compound ⁸ | 0 | 0 | 1 | 1 |

| | | | | |
|---|---|---|---|---|
| ⁷ MR 1420X DC, surface-functionalized multiwall carbon nanotubes (MWCNT) as dispersion of nominally 20% by weight in naphthenic oil (oil content included in total oil reported in Table 1), from Molecular Rebar Design LLC ⁸ Tetrazine compound of formula 1, as DS-01 from Otsuka Chemical | | | | |

**Table 3**

| Cure: 10 minutes @ 170°C | C1 | E1 | C2 | E2 |
|---|---|---|---|---|
| | | | | |
| Processing | | | | |
| Uncured G', Mpa¹ | 0.122 | 0.13 | 0.156 | 0.184 |
| | | | | |
| Cure | | | | |
| Delta Torque, 150°C² | 17 | 17.9 | 14.4 | 16.1 |
| T25 at 150°C, minutes ² | 1.6 | 1.6 | 1.4 | 1.4 |
| T90, at 150°C, minutes ² | 4.5 | 4.6 | 4.9 | 4.7 |
| | | | | |
| Stiffness | | | | |
| G'1%, MPa¹ | 3.1 | 3.8 | 2.3 | 2.8 |
| G' 10%, MPa¹ | 1.8 | 2 | 1.6 | 1.8 |
| G' 50%, MPa¹ | 1.001 | 1.043 | 0.967 | 1 |
| 100% Modulus, DieC | 2.6 | 2.8 | 2.7 | 3.1 |
| 300% Modulus, DieC | 9 | 9.5 | 11 | 11.1 |
| SHORE A 3S 23°C | 68 | 70 | 67 | 68 |
| G'10% (kPa)³ | 3068 | 3454 | 2349 | 2953 |
| Hysteresis | | | | |
| TD 10% ¹ | 0.122 | 0.136 | 0.102 | 0.121 |
| Rebound 23°C⁶ | 33 | 32 | 37 | 36 |
| Rebound 100°C⁶ | 57 | 54 | 63 | 60 |
| TD 10% ³ | 0.299 | 0.318 | 0.229 | 0.251 |
| | | | | |
| Tear | | | | |
| Tensile, MPa | 16 | 17 | 17 | 17 |
| Elongation, % | 477 | 508 | 429 | 436 |
| Tear Strength, 95°C (N)⁴ | 68 | 72 | 66 | 65 |
| | | | | |
| Wet | | | | |
| Rebound 0°C ⁶ | 20 | 21 | 21 | 21 |
| | | | | |
| Wear/ Abraison | | | | |
| Abrasion Rate (high)⁵ | 365 | 360 | 341 | 372 |

| | | | | |
|---|---|---|---|---|
| ¹ Data according to Rubber Process Analyzer as RPA 2000 instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, Apr. 26 and May 10, 1993 ² Cure properties were determined using a Monsanto oscillating disc rheometer (MDR) which was operated at a temperature of 150 °C and at a frequency of 11 hertz. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook. ³ Viscoelastic properties (G' and tan delta) were measured using an ARES Rotational Rheometer rubber analysis instrument which is an instrument for determining various viscoelastic properties of rubber samples, including their storage modulii (G') over a range of frequencies and temperatures in torsion. ⁴ Tear strength was determined following ASTM D4393 except that a sample width of 2.5 cm is used and a clear Mylar 15 plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area. ⁵ Abrasion was determined as Grosch abrasion rate as run on a LAT-100 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high abrasion severity test may be run, for example, at a load of 70 newtons, 12° slip angle, disk speed of 20 km/hr for a distance of 250 meters. ⁶ Rebound is a measure of hysteresis of the compound when subject to loading, as measured by ASTM D1054. In FIG. -1 the rebound is given as measured at 100 °C. Generally, the higher the measured rebound at 100 °C, the lower the rolling resistance in a tire containing the given compound. | | | | |

## Claims

1. A vulcanizable or vulcanized rubber composition comprising, based on parts by weight per 100 parts by weight elastomer (phr):
100 phr of at least one diene-based elastomer;
from 1 to 80 phr of carbon black;
from 0 to 100 phr of silica;
from 1 to 10 phr of a surface-functionalized carbon allotrope;
from 1 to 20 parts by weight of a sulfur-containing organosilane per 100 parts by weight of the silica;
from 0.1 to 10 phr of a tetrazine compound of formula 1 or a salt thereof 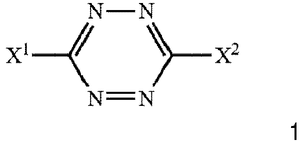
where X¹ and X² each represent a heterocyclic group.

2. The rubber composition of claim 1, wherein the carbon allotrope is a carbon nanotube selected from the group consisting of single-walled carbon nanotubes and multi-walled carbon nanotubes.

3. The rubber composition of claim 2, wherein the surface-functionalized carbon nanotubes comprise an oxidation level of from 1 to 15 weight percent, from 3 weight percent to 15 weight percent, or from 1 to 10 weight percent.

4. The rubber composition of claim 2, wherein the surface-functionalized carbon nanotubes comprise an oxidation level of from 5 weight percent to 10 weight percent, of from 1 to 5 weight percent, or of from 1 to 3 weight percent.

5. The rubber composition of at least one of the previous claims, wherein the surface-functionalized carbon nanotubes comprise surface oxidation species selected from the group consisting of carboxylic acid or derivative carbonyl containing species.

6. The rubber composition of at least one of the previous claims, wherein the surface-functionalized carbon nanotubes comprise surface oxidation species selected from the group consisting of phenols, ketones, quaternary amines, amides, esters, acyl halogens, monovalent metal salts, hydroxyl and hydroxyl derivative species.

7. The rubber composition of at least one of the previous claims, wherein the tetrazine compound of formula 1 is selected from the group consisting of 3,6-bis(2-pyridyl)-1,2,4,5-tetrazine; 3,6-bis(3-pyridyl)-1,2,4,5-tetrazine; 3,6-bis(4-pyridyl)-1,2,4,5-tetrazine;3,6-bis(2-furanyl)-1,2,4,5-tetrazine; 3,6-bis(3,5-dimethyl-1-pyrazolyl)-1,2,4,5-tetrazine; 3,6-bis(2-thienyl)-1,2,4,5-tetrazine; 3-methyl-6-(2-pyridyl)-1,2,4,5-tetrazine; 3,6-bis(2-pyrimidinyl)-1,2,4,5-tetrazine; and 3,6-bis(2-pyrazyl)-1,2,4,5-tetrazine.

8. The rubber composition of at least one of the previous claims, wherein the tetrazine compounds of formula 1 is selected from the group consisting of 3,6-bis(2-pyridyl)-1,2,4,5-tetrazine; 3,6-bis(3-pyridyl)-1,2,4,5-tetrazine; 3,6-bis(2-furanyl)-1,2,4,5-tetrazine; and 3,6-bi(4-pyridyl)-1,2,4,5-tetrazine.

9. The rubber composition of at least one of the previous claims, wherein the tetrazine compounds of formula 1 is selected from the group consisting of 3,6-bis(2-pyridyl)-1,2,4,5-tetrazine; 3,6-bis(3-pyridyl)-1,2,4,5-tetrazine; and 3,6-bis(4-pyridyl)-1,2,4,5-tetrazine.

10. The rubber composition of at least one of the previous claims, wherein the tetrazine compound of formula 1 is present is an amount ranging from 0.25 to 7 phr or in an amount ranging from 0.5 to 5 phr.

11. The rubber composition of at least one of the previous claims, wherein the sulfur-containing organosilane is selected from bis(trialkoxysilylalkyl) polysulfides, mercaptosilanes, and blocked mercaptosilanes.

12. The rubber composition of at least one of the previous claims, wherein the sulfur containing organosilicon compounds is selected from the group consisting of 3,3'-bis(triethoxysilylpropyl) disulfide, 3,3'-bis(triethoxysilylpropyl) tetrasulfide and 3-(octanoylthio)-1-propyltriethoxysilane.

13. The rubber composition of at least one of the previous claims, wherein the diene-based elastomer is selected from styrene-butadiene rubbers, polybutadiene rubbers, natural rubbers, synthetic polyisoprenes, and functionalized versions thereof.

14. A pneumatic tire comprising the rubber composition of at least one of the previous claims.

15. The pneumatic tire of claim 14 wherein the tire has a tread and wherein the tread comprises the rubber composition.
